# FASCICULE DE BREVET EUROPEEN

(11) **EP 3 748 118 B1**
(45) Date de publication et mention de la délivrance du brevet: **27.10.2021**
(21) Numéro de dépôt: 20187735.4
(22) Date de dépôt: 03.11.2017
(51) Int. Cl.: E06B 9/68, E06B 9/58, E06B 9/323, E06B 9/322, E06B 9/327, B60J 1/20

(54) **DISPOSITIF DE MANOEUVRE D'UN SYSTÈME D'OCCULTATION D'UNE BAIE ET INSTALLATION D'OCCULTATION METTANT EN OEUVRE UN TEL DISPOSITIF**
BETÄTIGUNGSVORRICHTUNG EINES VERDUNKELUNGSSYSTEMS EINER ÖFFNUNG, UND VERDUNKELUNGSANLAGE, BEI DER EINE SOLCHE VORRICHTUNG EINGESETZT WIRD
DEVICE FOR OPERATING A SYSTEM FOR CONCEALING AN OPENING AND CONCEALMENT FACILITY IMPLEMENTING SUCH A DEVICE

(30) Priorité: 10.11.2016 FR 1660930
(43) Date de publication de la demande: 09.12.2020
(62) Demande divisionnaire de: 17801081.5
(73) Titulaire: Flexoma, 69603 Villeurbanne Cedex (FR)
(72) Inventeur: PATIN, Aymeric, 69970 Marennes (FR)
(74) Mandataire: Jacobacci Coralis Harle

(56) Documents cités:
- EP-A2- 2 034 124
- EP-A2- 2 098 676
- DE-A1- 19 834 777
- DE-U1- 20 309 690
- DE-U1-202013 104 496

## Description

### DOMAINE TECHNIQUE

La présente invention concerne le domaine technique des dispositifs de manœuvre d'un système d'occultation d'une baie notamment d'une baie de véhicule ou encore d'un système d'occultation d'une baie de bâtiment.

### ETAT DE LA TECHNIQUE

Dans le domaine ci-dessus, il est connu l'emploi d'une barre de charge afin de maintenir l'extrémité d'un rideau d'occultation, d'une installation d'occultation d'une baie. La barre de charge s'étend entre deux rails de guidage, parallèles entre eux, et positionnés en vis-à-vis de la baie à occulter. Les rails de guidage sont configurés pour permettre à un utilisateur de translater la barre de charge entre une position de rétraction et une position d'extension, de manière à ce que le rideau occulte plus ou moins la baie.

A l'usage, il est apparu qu'une traction exercée à une extrémité de la barre de charge, peut engendrer un pivotement de la barre de charge par rapport aux rails de guidages, susceptible d'entraîner le blocage de l'installation d'occultation.

Afin de remédier à ce problème, il est connu par exemple du document EP2034124 A2 l'utilisation d'un système de câbles croisés, afin de guider en translation la barre de charge le long des rails de guidage. Pour cela, le système de câble croisés se compose de deux câbles circulant dans la barre de charge. Les extrémités de chaque câble sont fixées entre deux points situés à l'opposé l'un de l'autre et en diagonale de la baie, de manière à se croiser dans la barre de charge. Cet agencement des câbles empêche avantageusement le pivotement de la barre de charge lorsqu'un utilisateur manipule une extrémité de la barre de charge.

La présente invention vise à proposer une installation d'occultation d'une baie, comprenant deux barres de charge, afin de permettre plus de configuration partielle de la baie par un rideau d'occultation, comportant un système de câbles croisés qui soit simple à mettre en œuvre, économique à réaliser et efficace pour prévenir d'un pivotement des barres de charges lors de leur utilisation.

### DESCRIPTION DE L'INVENTION

Pour répondre à ce problème technique, l'invention propose une installation d'occultation d'une baie comprenant :
- un système d'occultation comportant une première extrémité liée à une première barre de charge, et une deuxième extrémité liée à une deuxième barre de charge, les barres de charges s'étendant entre deux rails de guidage positionnés en vis-à-vis d'une baie ; et
- un système de câbles croisés pour guider en translation chaque barre de charge le long des rails de guidage, entre une position de rétraction et une position d'extension.

L'invention est remarquable en ce que le système de câble croisés comprend :
- un premier câble fixé entre deux points situés d'un même côté de la baie, le premier câble circulant dans les deux barres de charge ;
- un deuxième câble fixé entre deux points situés à l'opposé l'un de l'autre et en diagonale de la baie, le deuxième câble circulant dans les deux barres de charge ;
- un troisième câble fixé entre deux points situés à l'opposé l'un de l'autre et en diagonale de la baie, le troisième câble circulant dans une seule des deux barres de charge.

Ainsi, de façon avantageuse, le pivotement des deux barres de charge par rapport aux rails de guidage, est évité grâce à l'emploi de trois câbles agencés de manière ingénieuse dans l'installation d'occultation. L'emploi de trois câbles permet une mise en œuvre plus simple et économique par rapport à l'état de la technique.

D'autres variantes de réalisation de l'invention sont décrites dans le jeu de revendications ci-joint.

### DESCRIPTION DES FIGURES

L'invention sera mieux comprise, grâce à la description ci-après, qui se rapporte à des modes de réalisations préférés, donnés à titre d'exemples non limitatifs, et expliqués avec référence aux dessins schématiques annexés, dans lesquels :
- la figure 1 est une vue d'ensemble d'une installation d'occultation d'une baie mettant en œuvre un dispositif de manœuvre,
- la figure 2 est une perspective partielle montrant un détail constructif de l'ensemble illustré à la figure 1,

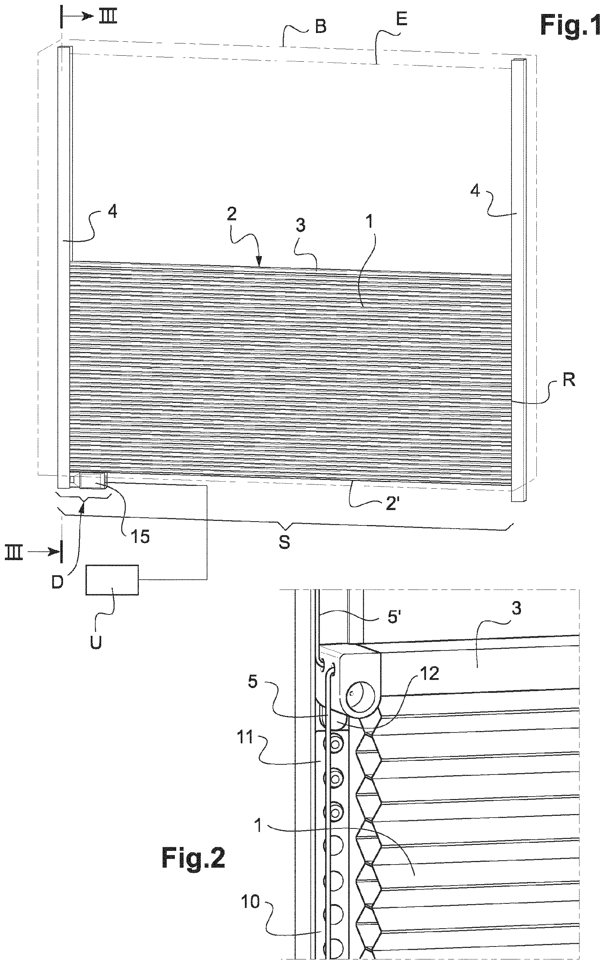

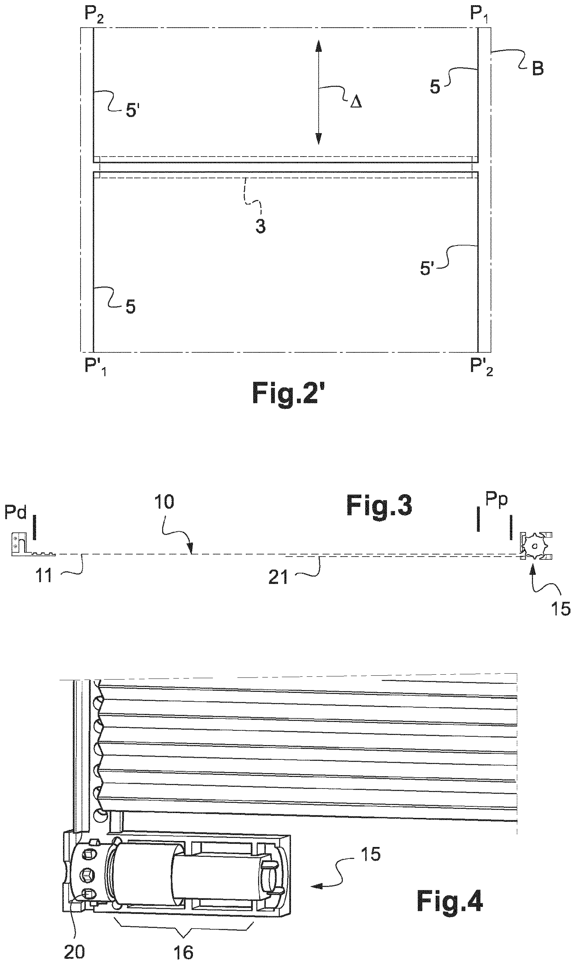

- la figure 2' est un schéma de principe d'un système de câbles croisés assurant le guidage de la barre de charge et sa perpendicularité à la bande poussante,
- la figure 3 est une section schématique selon la ligne III-III de la figure 1,

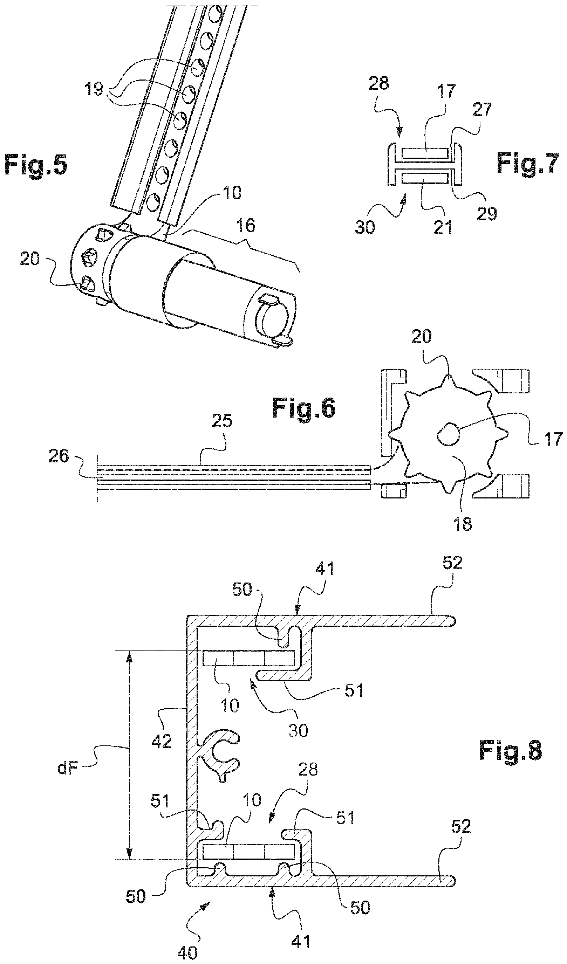

- les figures 4 et 5 sont des perspectives partielles schématiques montrant notamment les moyens d'entraînement du dispositif de manœuvre illustré à la figure 1,
- les figures 6 et 7 sont des coupes schématiques montrant des détails constructifs du dispositif de manœuvre représenté à la figure 1,
- la figure 8 est une section droite transversale d'un profilé définissant deux voies de guidage pour les deux brins de la bande passante situés de part et d'autre de la roue d'entrainement et de renvoi,

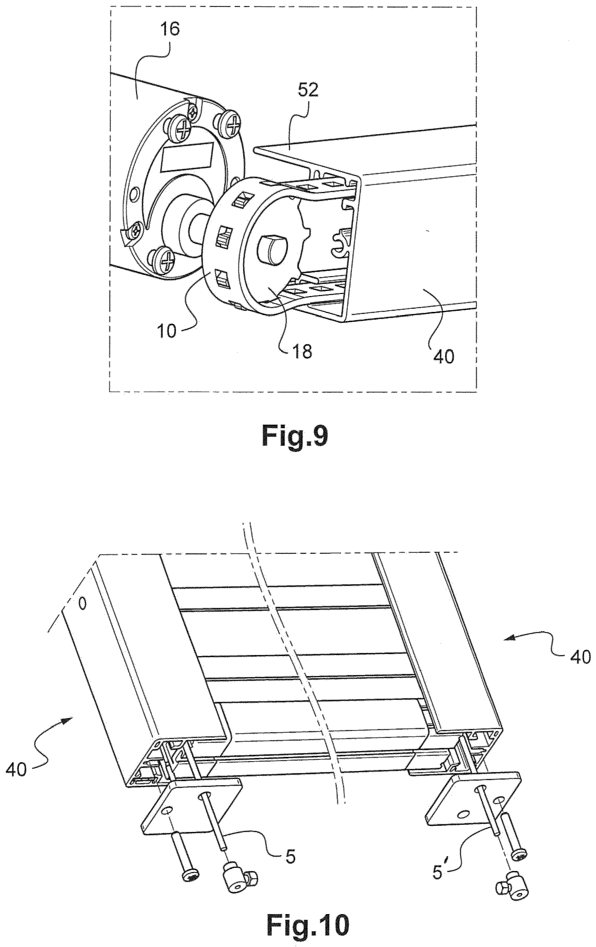

- la figure 9 est une perspective schématique arrachée montrant un exemple de mise en œuvre du profilé selon la figure 9 au niveau du renvoi de la bande poussante autour de la roue d'entrainement,
- la figure 10 est une perspective éclatée de détails constructifs d'une installation d'occultation conforme à l'invention mettant en œuvre le profilé illustré à la figure 8,

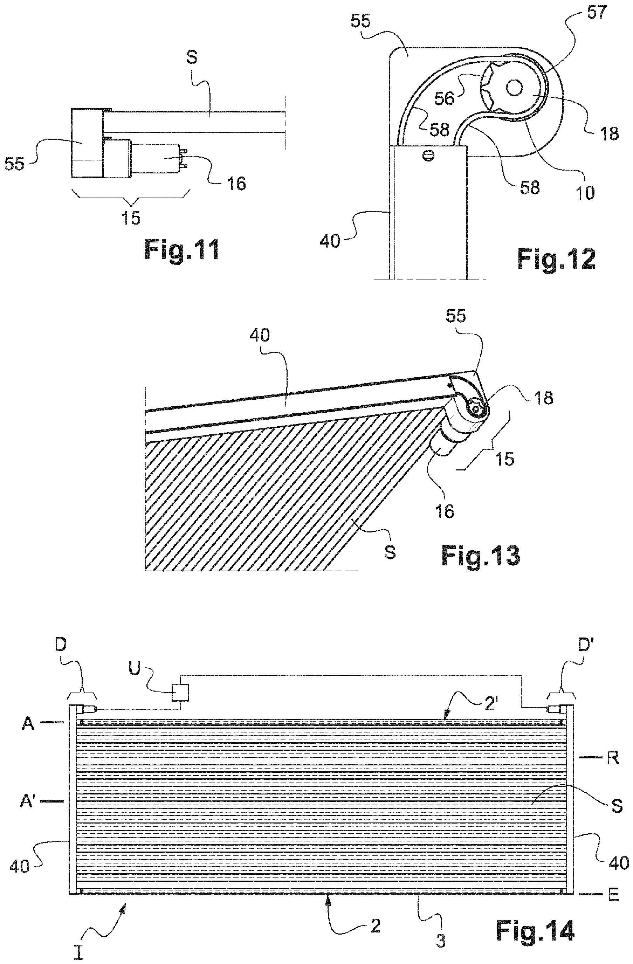

- la figure 11 est vue de dessus partielle d'une forme de réalisation des moyens de motorisation du dispositif de manœuvre selon l'invention,
- la figure 12 est une vue de gauche partielle des moyens de motorisation illustrés à la figure 11,
- La figure 13 est une perspective schématique des moyens de motorisation illustrés figures 11 et 12,

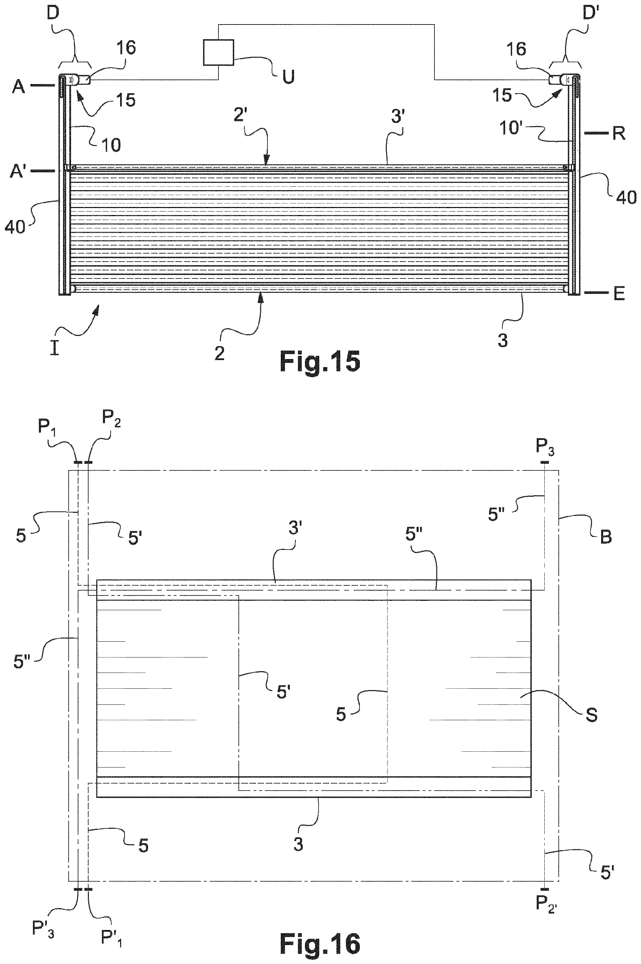

- les figures 14 et 15 sont des vues schématiques d'une forme de réalisation d'une installation d'occultation selon l'invention dont le système d'occultation comprend deux extrémités mobiles,
- la figure 16 est une vue schématique d'un système de câbles croisés selon l'invention, mis en œuvre dans l'installation illustrée figures 14 et 15,

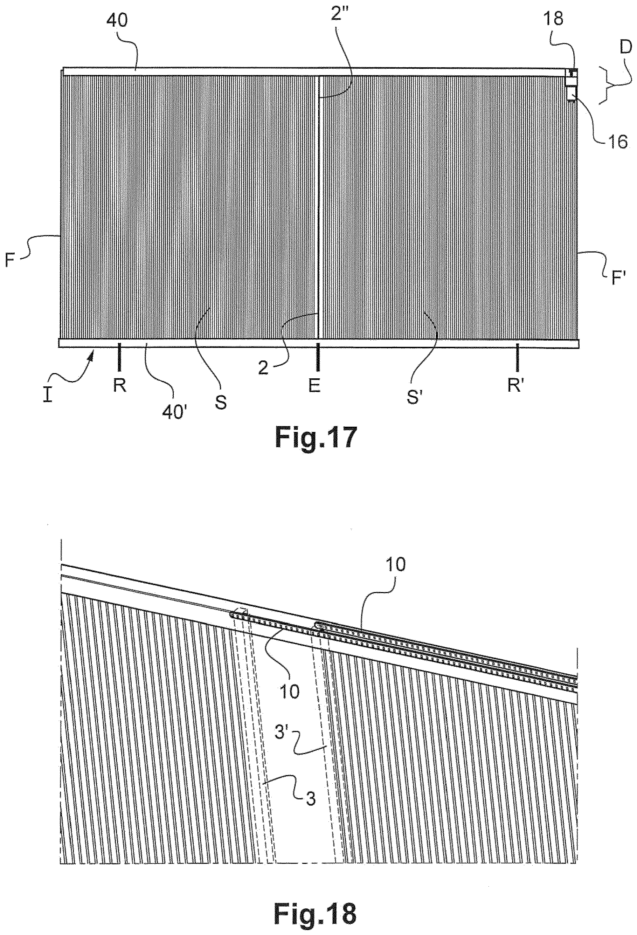

- la figure 17 est une élévation de face schématique d'une installation d'occultation comprenant deux systèmes d'occultation à déplacement horizontal,
- la figure 18 est une perspective partiellement arrachée montrant la liaison des deux systèmes d'occultation avec la bande poussante du dispositif de manœuvre associé,

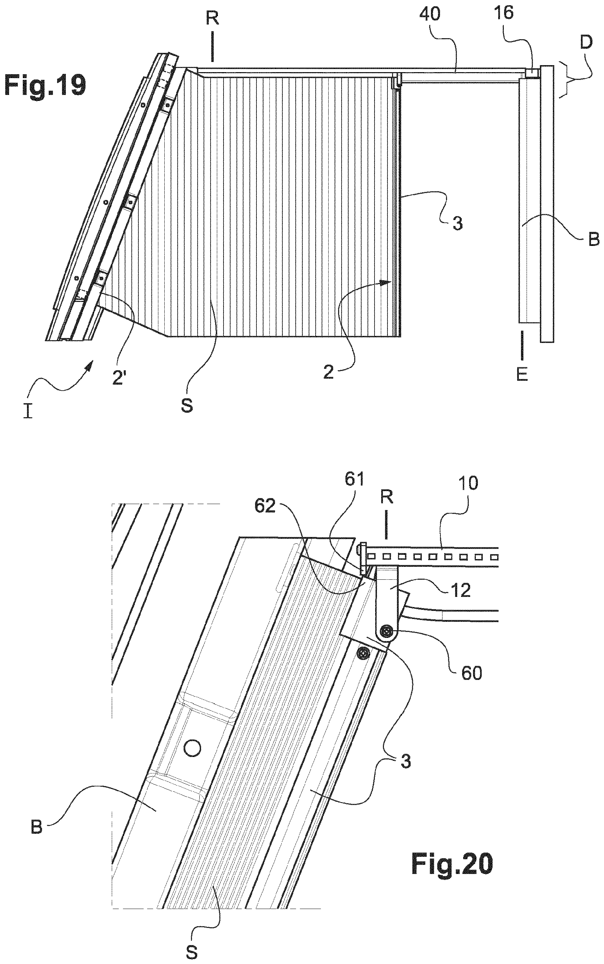

- la figure 19 est une vue schématique d'une installation d'occultation d'une baie de forme trapézoïdale,
- la figure 20 est une vue à plus grande échelle d'un détail constructif de l'installation illustrée à la figure 19.

Il est à noter que sur ces figures les éléments structurels et/ou fonctionnels communs aux différentes variantes ou formes de réalisation peuvent présenter les mêmes références.

### DESCRIPTION DETAILLEE DE L'INVENTION

L'invention vise à proposer des moyens permettant la manœuvre motorisée d'un système d'occultation S d'une baie B, par exemple d'un bâtiment ou d'un véhicule, vitré ou non symbolisé en traits mixtes à la figure 1. Selon l'exemple illustré, le système d'occultation S comprend un rideau 1 ayant au moins une extrémité 2 mobile entre une position de rétraction R et une position d'extension E dans laquelle le système S occulte en partie au moins la baie B. Le rideau 1 comprend à l'opposé de l'extrémité mobile 2 une extrémité fixe 2'. Dans le cas présent, l'extrémité mobile 2 est solidaire d'une barre de charge 3 qui s'étend sur toute la largeur du rideau 1 entre deux rails de guidage 4 en « U » dans lesquels sont disposées les extrémités latérales du rideau 1.

Afin de garantir la perpendicularité de la barre de charge 3 par rapport aux rails de guidage 4, il est mis en œuvre, comme le montrent figures 2 et 2', un système de câbles croisés 5 et 5'.

La figure 2' illustre plus particulièrement le principe du système de câbles croisés. Comme cela ressort de cette figure, les extrémités de chaque câble 5, 5' sont fixes et liées de manière rigide en deux points, respectivement P1,P1' et P2,P2', opposés en diagonale de la baie B. Chaque câble 5, 5' passe en outre à l'intérieur de la barre de charge 3 qui peut glisser sur les câbles. Chaque câble 5,5' présente alors une longueur sensiblement égale à somme de la longueur de la barre de charge 3 et de la distance séparant les points fixes P1,P1' et P2,P2' dudit câble mesurée parallèlement à la direction de déplacement Δ de la barre de charge 3. En plus d'assurer le guidage de la barre de charge les câbles croisés permettent de déplacer la barre de charge en appliquant l'effort de manœuvre uniquement à l'une de ses extrémités.

Afin d'assurer un déplacement motorisé de l'extrémité mobile 2, l'invention propose un dispositif de manœuvre D qui comprend, comme le montrent les figures 2 et 3, une bande poussante 10 flexible dont une première extrémité 11 est liée à un chariot 12 solidaire de la barre de charge 3. Selon l'invention, la bande poussante 10 n'est pas liée de manière rigide à l'ensemble ou la totalité du système d'occultation et plus particulièrement la bande poussante n'est pas intégrée au rideau 1. Bien entendu, cela n'exclut pas une liaison rigide entre la première extrémité 11 de la bande poussante 10 et l'extrémité mobile du rideau 1 ou le chariot 12. Selon l'exemple illustré, la barre de charge 3 est liée de manière réversible au chariot 12 de manière à permettre un démontage de leur liaison de sorte que la barre de charge 3 et donc le système d'occultation S peuvent être manœuvrés manuellement même en cas de disfonctionnement du dispositif D de manœuvre motorisé selon l'invention. De plus, il est mis en œuvre, entre la bande poussante et la barre de charge, une liaison pivot d'axe perpendiculaire au plan de la bande poussante de manière à réduire la transmission d'efforts de torsion lors d'entrainement de la barre de charge.

La bande poussante 10 est adaptée pour transmettre, à l'extrémité mobile 2 et plus particulièrement au chariot 12, soit un effort de poussée de manière à assurer le déploiement du rideau 1 jusqu'à la position d'extension E, soit un effort de traction de manière à assurer le repliement du rideau 1 jusqu'à la position de rétraction R. La bande poussante 10 doit donc être suffisamment rigide pour permettre la transmission des efforts nécessaires au déplacement de l'extrémité mobile tout en étant suffisamment flexible pour permettre un repliement de la bande sur elle-même comme cela apparaîtra par la suite, et cela pour un grand nombre de cycles.

La bande poussante 10 doit, de plus, ne pas être trop épaisse de manière à s'intégrer facilement dans l'encombrement réservé au système d'occultation. À cet effet la bande poussante 10 présente une épaisseur inférieure ou égale à 3 mm, de manière préférée inférieure ou égale à 0,5 mm et de manière plus particulièrement préférée inférieure ou égale à 0,2 mm.

Afin de répondre à ces exigences de caractéristiques mécaniques et dimensionnelles, la bande poussante 10 est de préférence réalisée en Polypropylène (PP).

Le dispositif de manœuvre D comprend en outre des moyens d'entraînement 15 motorisés de la bande poussante 10 adaptés pour assurer le déplacement en translation de la première extrémité 11 entre une position proximale Pp correspondant à la position de rétraction R du rideau 1 et une position distale Pd correspondant à la position d'extension E du rideau 1. Les moyens d'entraînement 15 sont pilotés par une unité de commande U qui peut être réalisée de toute manière appropriée et notamment comprendre une interface d'intégration à l'électronique d'un véhicule sur lequel le dispositif de manœuvre est destiné à être intégré. Le dispositif de manœuvre peut en outre comprendre un ou plusieurs capteurs reliés à l'unité de commande U pour permettre une détermination de la position de chaque extrémité mobile du système d'occultation.

Comme cela ressort des figures 4 à 6, les moyens d'entraînement 15 comprennent un motoréducteur électrique 16 dont un axe de sortie 17 est lié en rotation à une roue d'entraînement 18 adaptée pour déplacer la bande poussante 10. Selon l'exemple illustré, la bande poussante 10 est trouée de manière à présenter des perforations 19 réparties selon un pas régulier. La roue d'entraînement 18 présente alors des dents 20 destinées à coopérer avec les perforations 19 de la bande poussante 10 de manière à limiter le glissement de cette dernière par rapport à la roue d'entraînement 18.

La rigidité de la bande poussante 10 et la coopération des perforations avec les dents de la roue d'entraînement permettent la transmission des efforts importants et cela malgré la finesse ou la faible épaisseur de la bande poussante.

Selon l'invention, la roue d'entraînement 18 assure également une fonction de roue de renvoi dans la mesure où la deuxième extrémité 21 de la bande poussante 10 est ici renvoyée sous la première extrémité. Il est à noter que la bande poussante 10 entoure alors la roue d'entraînement et de renvoi 18 sur un secteur angulaire supérieur à 180° et plus particulièrement compris entre 180° et 340°.

Afin d'éviter toute interférence entre les deux brins de la bande poussante 10 situés en amont et en aval de la roue d'entraînement 18, il est mis en œuvre un guide 25, visible aux figures 6 et 7 avec une paroi longitudinale médiane 26. Une première face 27 de la paroi médiane 26 délimite en partie au moins une première glissière 28 dans laquelle circule la première extrémité de la bande poussante tandis qu'une face 29 opposée à la première 27 délimite une deuxième glissière 30 dans laquelle circule la deuxième extrémité 21. De manière préférée et comme le montre la figure 7, le guide 25 présente une section droite transversale en forme de H.

Le motoréducteur 16 est, par ailleurs, raccordé à une unité de commande U qui permet à un utilisateur de piloter le fonctionnement dudit motoréducteur pour assurer sa rotation dans un sens ou dans un autre selon qu'il faille ouvrir ou fermer le système d'occultation. Il pourra être noté que l'ensemble comprenant le dispositif de manœuvre D et le système d'occultation S forme, au sens de l'invention, une installation I d'occultation de la baie E.

Dans le cadre de l'exemple décrit en relation avec les figures 1 à 7, le dispositif de manœuvre conforme à l'invention prévoit un renvoi de la bande poussante 10 de sorte que les deux brins de cette dernière situés de part et d'autre de la roue d'entraînement et de renvoi 18 circulent sur des voies parallèles et superposées. Selon cet exemple, le guide 25 définit les glissières ou voies de guidage parallèles et superposées, voire juxtaposées.

Toutefois, un tel mode de réalisation du guide 25 n'est pas strictement nécessaire. Ainsi, selon une autre forme de réalisation de l'invention plus particulièrement illustrée figure 8 et 9, le guide 25 est formé par un profilé 40 qui porte et délimite en partie au moins les voies de guidage 28 et 30. Selon cet exemple, le profilé 40 possède une forme générale en U avec deux branches parallèles 41 reliées par une âme 42. Chaque branche 41 délimite ou forme une voie de guidage 28, 30 pour une extrémité ou un brin de la bande poussante 10. Dans le cas présent, la voie de guidage 28 possède une section en forme de C tandis que la voie de guidage 30, en regard possède une section en forme de G. il est à noter que les voies de guidage 28 et 30 possèdent chacune au moins une nervure longitudinale 50 située regard d'un retour 51 fermant partiellement la voie correspondante de manière à maintenir la bande poussante 10. Il doit être remarqué que selon cet exemple les branches 41 sont prolongées à l'opposé de l'âme 42 chacune par une aile 52. Les deux ailes 52 délimitent alors un espace dans lequel peuvent, par exemple et comme le montre la figure 10, être situés les câbles croisés 5 et 5' de guidage de la barre de charge ainsi que les extrémités latérales du système d'occultation et de la barre de charge. Le profilé possède ainsi plusieurs fonctions, dont celles de guidage de la bande poussante, de la barre de charge et du système d'occultation.

Dans le cas de la mise en œuvre d'un tel profilé, la distance df séparant le fond, ici définit par les nervures 50, des voies de guidage 28, 30 en regard est, de préférence, inférieure ou égale au diamètre de la roue d'entrainement 18 mesurée aux extrémités de ses dents.

Selon une forme de réalisation plus particulièrement illustrée aux figures 11 à 13, le dispositif de manœuvre D et plus particulièrement les moyens d'entraînement 15 comprennent un boitier 55 qui entoure la roue d'entrainement et de renvoi 18. Le boitier 55 délimite une chambre d'entrainement 56 à l'intérieur de laquelle est située la roue d'entrainement 18. La paroi périphérique 57 de la chambre 56 guide alors la bande poussante 10. Selon l'exemple illustré, le boitier 55 délimite, en sortie de la chambre d'entrainement 56, deux portions des voies de guidage 58 qui sont courbées et qui se raccordent aux portions de voie de guidage rectilignes délimitées par le profilé 40 également rectiligne. La forme courbe des portions de voie de guidage 58 délimitées par le boitier 55 permettent de réduite la dimension du dispositif mesurée parallèlement à la direction de translation du système d'occultation. Bien entendu, selon une autre forme de réalisation le boitier 55 peut aussi comporter des portions de voies de guidage rectilignes.

Selon l'exemple de réalisation décrit en relation avec les figures 1 à 7, le dispositif de manœuvre ne comprend qu'une seule bande poussante située d'un côté du rideau 1. Toutefois il pourrait être mis en œuvre plus d'une bande poussante et notamment deux bandes poussantes situées de part et d'autre du rideau 1 et dans les rails 4. Les deux bandes poussantes peuvent alors, soient être entraînées par des moyens d'entraînement communs, soient être entraînées par des moyens d'entraînement distincts mais synchronisés.

Toujours selon l'exemple de réalisation décrit en relation avec les figures 1 à 7, le système d'occultation ne comprend qu'une extrémité mobile. Toutefois un tel mode de réalisation n'est pas strictement nécessaire. Ainsi, la figure 14 illustre une forme de réalisation d'une installation d'occultation I selon l'invention dont le système d'occultation S comprend deux extrémités mobiles en translation 2 et 2'. La première extrémité 2 est mobile en translation entre une position de rétraction R et une position d'extension E, tandis que la deuxième extrémité est mobile en translation entre une première position A et une deuxième position A'.

Lorsque la première extrémité 2 est en position d'extension R et la deuxième extrémité 2' en première position A, la baie est alors complètement occultée comme le montre la figure 14. Lorsque la première extrémité 2 est en position d'extension R et la deuxième extrémité 2' en deuxième position A', la baie est alors partiellement occultée en partie basse comme le montre la figure 15. Cette configuration peut être qualifiée de position d'intimité dans la mesure où la lumière passe par le haut de la baie mais il n'est pas possible de voir au travers de la partie basse de la baie. Lorsque la deuxième extrémité 2' est en première position A et la première extrémité 2 en position de rétraction R, le système d'occultation S est en position relevée et la baie se trouve dégagée au maximum possible.

Dans le cas présent, la première extrémité mobile 2 du système d'occultation S est liée à une première barre de charge 3 qui s'étend entre des deux rails de guidage 40 et la deuxième extrémité mobile 2' du système d'occultation S est liée à une deuxième barre de charge 3' qui s'étend également entre les deux rails de guidage 40. L'installation d'occultation I comprend alors un système de câbles croisés 5, 5', 5" adaptés pour guider des deux barres de charge 3, 3' pendant leur déplacement.

Comme le montre la figure 16 il est mis en œuvre trois câbles 5,5',5", les points de fixation rigide étant respectivement P1, P1' pour le câble 5, P2,P2' pour le câble 5' et P3,P3' pour le câble 5". Le premier câble 5 s'étend entre les points P1 et P1' situés d'un même côté de la baie B en circulant dans les deux barres de charge 3 et 3'. Le deuxième câble 5' s'étend entre les points P2 et P2' situés à l'opposé l'un de l'autre en diagonale de la baie B en circulant dans les deux barres de charge 3 et 3'. Le troisième câble 5" s'étend entre les points P3 et P3' situés à l'opposé l'un de l'autre en diagonale de la baie B en circulant dans une seule des deux barres de charge, ici la deuxième barre de charge 3'. Une telle configuration des câbles croisés permet avantageusement de guider deux barres de charge avec trois câbles et non pas quatre comme cela est généralement le cas.

Afin d'assurer une manœuvre motorisée des deux barres de charge 3 et 3', l'installation I comprend, d'une part, un premier dispositif de manœuvre D, selon l'invention, dont la bande poussante 10 est liée à la première extrémité mobile 2 par la première barre de charge 3 et, d'autre part, un deuxième dispositif de manœuvre D', selon l'invention, dont la bande poussante 10' est liée à la deuxième extrémité mobile 2' par la deuxième barre de charge 3'.

Selon les exemples décrits précédemment, l'installation d'occultation comprend un seul système d'occultation ou rideau S. Toutefois, l'installation d'occultation I selon l'invention peut comprendre deux systèmes d'occultation S et S' comme le montre la figure 17.

Ainsi, l'installation I comprend un premier système d'occultation S dont une extrémité F est fixe tandis que son autre extrémité 2 est mobile en translation entre une position de rétraction R et une position d'extension E dans laquelle le premier système S occulte en partie au moins la baie. L'installation I comprend également un deuxième système d'occultation S' comprenant une extrémité fixe F' et une extrémité 2" mobile en translation entre une position de rétraction R' et la position d'extension E dans laquelle le deuxième système S' occulte en partie au moins la baie.

L'installation I comprend également un dispositif de manœuvre D selon l'invention dont la bande poussante 10 est liée aux extrémités mobiles 2 et 2' des deux systèmes d'occultation comme le montre la figure 18. Ainsi une rotation dans un sens de la roue d'entrainement et de renvoi 18 assure un rapprochement des extrémités mobiles 2 et 2' des deux systèmes d'occultation S et S' tandis qu'une rotation en sens inverse assure un éloignement des extrémités mobiles.

Selon l'exemple illustré figures 17 et 18, l'installation comprend pour chaque système d'occultation S et S', une barre de charge 3, 3' qui est solidaire de l'extrémité mobile correspondante 2, 2". Dans le cas présent, les barres de charge 3 et 3' sont liées à la bande poussante 10 au niveau des deux extrémités opposées de cette dernière.

Les figures 19 et 20 montrent un exemple de réalisation d'une installation d'occultation d'une baie B de forme trapézoïdale. Selon cet exemple, le système d'occultation ou rideau S comprend une extrémité fixe qui est liée au côté incliné de la baie B. L'extrémité mobile 2 opposée du système d'occultation S est liée à une barre de charge 3 qui est déplacée par un dispositif de manœuvre D conforme à l'invention. La barre de charge est alors mobile entre la position de rétraction R illustré figure 20 et la position d'extension E.

Selon cet exemple de réalisation, la barre de charge 3 est liée au chariot 12 solidaire de la bande poussante 10 par l'intermédiaire d'une liaison pivot 60 d'axe perpendiculaire au plan de la bande poussante 10. Dans le cas présent, l'axe de la liaison pivot est sensiblement horizontal. De plus, l'axe 60 est situé à distance de l'extrémité de la barre de charge 3 comme le montre la figure 19. L'installation I comprend en outre une butée 61 qui définit la position de rétraction R et qui est située plus haut que la liaison pivot 60. Ainsi, lorsque la barre de charge 3 est amenée en position de rétraction R par la bande poussante 10 son extrémité 62 vient en appui contre la butée 61 ce qui induit une rotation de la barre de charge 3 pour la rendre parallèle au côté incliné de la baie.

Bien entendu, diverses autres variantes ou formes de réalisation peuvent être envisagées pour le dispositif de manœuvre et l'installation selon l'invention dans le cadre des revendications annexées.

## Revendications

1. Installation d'occultation d'une baie (B) comprenant :
- un système d'occultation (S) comportant une première extrémité (2) liée à une première barre de charge (3), et une deuxième extrémité (2') liée à une deuxième barre de charge (3'), les barres de charges s'étendant entre deux rails de guidage (40) positionnés en vis-à-vis d'une baie (B) ; et
- un système de câbles croisés pour guider en translation chaque barre de charge (3, 3') le long des rails de guidage (40), entre une position de rétraction (R) et une position d'extension (E) ; comprenant.
- un premier câble (5) fixé entre deux points (P1, P1') situés d'un même côté de la baie (B), le premier câble (5) circulant dans les deux barres de charge (3, 3') ;
- un deuxième câble (5') fixé entre deux points (P2, P2') situés à l'opposé l'un de l'autre et en diagonale de la baie (B), le deuxième câble (5') circulant dans les deux barres de charge (3, 3');
**caractérisé en ce que** le système de câbles croisés comprend:
- un troisième câble (5") fixé entre deux points (P3, P3') situés à l'opposé l'un de l'autre et en diagonale de la baie (B), le troisième câble (5") circulant dans une seule des deux barres de charge (3, 3').

2. Installation d'occultation d'une baie (B) selon la revendication 1, **caractérisée en ce que** chaque câble (5, 5', 5") passe à l'intérieur d'une ou de plusieurs barres de charge (3, 3') glissant sur ledit câble.

3. Installation d'occultation d'une baie (B) selon la revendication 1 ou 2, **caractérisée en ce qu'**entre leur point de fixation (P1, P1', P2, P2', P3, P3'), chaque câble (5, 5', 5") a une longueur sensiblement égale à la somme de la longueur d'une barre de charge (3, 3') et à la distance séparant ses points de fixation (P1, P1', P2, P2', P3, P3'), mesurée parallèlement à la direction de déplacement d'une barre de charge (3, 3').

4. Installation d'occultation d'une baie (B) selon l'une des revendications 1 à 3, **caractérisée en ce que** le premier câble (5) circule dans les deux tiers de la longueur de chaque barre de charge (3, 3').

5. Installation d'occultation d'une baie (B) selon l'une des revendications 1 à 4, **caractérisée en ce que** le deuxième câble (5') circule dans les deux tiers de la longueur de la première barre de charge (3) et dans un tiers de la longueur de la deuxième barre de charge (3').

6. Installation d'occultation d'une baie (B) selon l'une des revendications 1 à 5, **caractérisée en ce qu'**entre la première barre de charge (3) et la deuxième barre de charge (3'), le premier et le deuxième câble (5, 5') sont perpendiculaires aux barres de charge (3, 3').

7. Installation d'occultation d'une baie (B) selon l'une des revendications 1 à 6, **caractérisée en ce que** le troisième câble (5") circule dans la deuxième barre de charge (3').

8. Installation d'occultation d'une baie (B) selon l'une des revendications 1 à 7, **caractérisée en ce qu'**elle comprend un premier dispositif de manœuvre (D) comportant une bande poussante (10) liée à la première barre de charge (3), et/ou un deuxième dispositif de manœuvre (D') comportant une bande poussante (10') liée à la deuxième barre de charge (3').

9. Installation d'occultation d'une baie (B) selon la revendication 8, **caractérisée en ce que** la bande poussante (10) du premier dispositif de manœuvre (D) circule dans deux voies ou glissières parallèles (28, 30), situées au niveau d'un côté de la baie (B), et/ou **en ce que** la bande poussante (10') du deuxième dispositif de manœuvre (D') circule dans deux voies ou glissières parallèles (28, 30), situées au niveau d'un côté opposé de la baie (B).

10. Installation d'occultation d'une baie (B) selon la revendication 9, **caractérisée en ce que** chaque dispositif de manœuvre (D, D') comprend :
- une bande poussante (10, 10') flexible qui comprend une première extrémité (11) liée à une barre de charge (3, 3') et une seconde extrémité (22), la bande poussante étant adaptée pour transmettre un effort de poussée à ladite barre de charge (3, 3') ;
- des moyens d'entrainement (15) motorisés de la bande poussante (10, 10'), adaptés pour assurer le déplacement en translation de la bande poussante (10, 10') entre une position proximale (Pp) correspondant à la position de rétraction (R) d'une barre de charge (3, 3') et une position distale (Pd) correspondant à la position d'extension (E) de la barre de charge (3, 3') ;
- la première et deuxième extrémités (11, 22) de la bande poussante (10, 10') circulent dans les deux voies ou glissières parallèles (28, 30), superposées ou en regard l'une de l'autre, et les moyens d'entrainement (15) comprennent une roue d'entrainement et de renvoi (18) autour de laquelle la bande poussante (10, 10') s'enroule partiellement, de manière qu'une portion de la bande poussante (10, 10') est située dans la première glissière (28) et une autre portion est située dans la deuxième glissière (30).

11. Installation d'occultation d'une baie (B) selon la revendication 9 ou 10, **caractérisé en ce que** les deux voies ou glissières (28, 30) sont délimitées par une même paroi médiane (26).

12. Installation d'occultation d'une baie (B) selon l'une des revendications 8 à 11, **caractérisé en ce qu'**au moins une bande poussante (10, 10') est réalisée en polypropylène.

13. Installation d'occultation d'une baie (B) selon l'une des revendications 8 à 12, **caractérisé en ce qu'**au moins une bande poussante (10, 10') est reliée à une barre de charge (3, 3') par l'intermédiaire d'une liaison pivot d'axe perpendiculaire au plan de la bande poussante (10, 10').

14. Installation d'occultation d'une baie (B) selon l'une des revendications 8 à 13, **caractérisé en ce qu'**une première extrémité (2) d'une bande poussante (10, 10') est liée de manière réversible à une barre de charge (3, 3'), pour permettre un démontage de leur liaison afin de manœuvrer manuellement la barre de charge (3, 3').

15. Véhicule automobile comprenant une installation d'occultation selon l'une des revendications 1 à 14.

## Patentansprüche

1. Verdunklungsanlage einer Öffnung (B) mit
- einem Verdunklungssystem (S), das ein mit einer ersten Laststange (3) verbundenes erstes Ende (2) und ein mit einer zweiten Laststange (3') verbundenes zweites Ende (2') aufweist, wobei sich die Laststangen zwischen zwei einer Öffnung (B) gegenüberliegenden Führungsschienen (40) erstrecken, und
- einem System gekreuzter Seile, um jede Laststange (3, 3') entlang den Führungsschienen (40) zwischen einer eingefahrenen Stellung (R) und einer ausgefahrenen Stellung (E) translatorisch zu führen, das
- ein zwischen zwei auf einer selben Seite der Öffnung (B) gelegenen Punkten (P1, P1') befestigtes erstes Seil (5), wobei das erste Seil (5) in den beiden Laststangen (3, 3') läuft,
- ein zwischen zwei zueinander entgegengesetzt und über die Öffnung (B) diagonal angeordneten Punkten (P2, P2') befestigtes zweites Seil (5'), wobei das zweite Seil (5') in den beiden Laststangen (3, 3') läuft, aufweist,
**dadurch gekennzeichnet, daß** das System gekreuzter Seile
- ein zwischen zwei zueinander entgegengesetzt und über die Öffnung (B) diagonal gelegenen Punkten (P3, P3') befestigtes drittes Seil (5"), wobei das dritte Seil (5") in einer einzigen der beiden Laststangen (3, 3') läuft, aufweist.

2. Verdunklungsanlage einer Öffnung (B) gemäß Anspruch 1, **dadurch gekennzeichnet, daß** jedes Seil (5, 5', 5") im Inneren einer oder mehrerer der Laststangen (3, 3') läuft, die auf dem Seil gleiten.

3. Verdunklungsanlage einer Öffnung (B) gemäß Anspruch 1 oder 2, **dadurch gekennzeichnet, daß** jedes Seil (5, 5', 5") zwischen seinem Befestigungspunkt (P1, P1`, P2, P2' P3, P3') eine Länge aufweist, die im Wesentlichen gleich der Summe der Länge einer Laststange (3, 3') und der seine Befestigungspunkte (P1, P1', P2, P2' P3, P3') trennenden, parallel zur Verlagerungsrichtung einer Laststange (3, 3') gemessenen Entfernung ist.

4. Verdunklungsanlage einer Öffnung (B) gemäß einem der Ansprüche 1 bis 3, **dadurch gekennzeichnet, daß** das erste Seil (5) in zwei Dritteln der Länge jeder Laststange (3, 3') läuft.

5. Verdunklungsanlage einer Öffnung (B) gemäß einem der Ansprüche 1 bis 4, **dadurch gekennzeichnet, daß** das zweite Seil (5') in zwei Dritteln der Länge der ersten Laststange (3) und in einem Drittel der Länge der zweiten Laststange (3') läuft.

6. Verdunklungsanlage einer Öffnung (B) gemäß einem der Ansprüche 1 bis 5, **dadurch gekennzeichnet, daß** das erste und das zweite Seil (5, 5') zwischen der ersten Laststange (3) und der zweiten Laststange (3') senkrecht zu den Laststangen (3, 3') sind.

7. Verdunklungsanlage einer Öffnung (B) gemäß einem der Ansprüche 1 bis 6, **dadurch gekennzeichnet, daß** das dritte Seil (5") in der zweiten Laststange (3') läuft.

8. Verdunklungsanlage einer Öffnung (B) gemäß einem der Ansprüche 1 bis 7, **dadurch gekennzeichnet, daß** sie eine erste Betätigungsvorrichtung (D) mit einem mit der ersten Laststange (3) verbundenen Schubband (10) und/oder eine zweite Betätigungsvorrichtung (D') mit einem mit der zweiten Laststange (3') verbundenen Schubband (10') aufweist.

9. Verdunklungsanlage einer Öffnung (B) gemäß Anspruch 8, **dadurch gekennzeichnet, daß** das Schubband (10) der ersten Betätigungsvorrichtung (D) in zwei parallelen Wegen oder Gleitschienen (28, 30) läuft, die im Bereich einer Seite der Öffnung (B) gelegen sind und/oder daß das Schubband (10') der zweiten Betätigungsvorrichtung (D') in zwei parallelen Wegen oder Gleitschienen (28, 30) läuft, die im Bereich einer gegenüberliegenden Seite der Öffnung (B) gelegen sind.

10. Verdunklungsanlage einer Öffnung (B) gemäß Anspruch 9, **dadurch gekennzeichnet, daß** jede Betätigungsvorrichtung (D, D')
- ein flexibles Schubband (10, 10'), das ein mit einer Laststange (3, 3') verbundenes erstes Ende (11) und ein zweites Ende (22) aufweist, wobei das Schubband dazu ausgelegt ist, eine Schubkraft auf die Laststange (3, 3') zu übertragen,
- motorisierte Mittel (15) für den Antrieb des Schubbands (10, 10'), die dazu ausgelegt sind, eine translatorische Verlagerung des Schubbands (10, 10') zwischen einer nahen Stellung (Pp), die der eingefahrenen Stellung (R) einer Laststange (3, 3') entspricht, und einer entfernten Stellung (Pd), die der ausgefahrenen Stellung (E) der Laststange (3, 3') entspricht, sicherzustellen, aufweist,
- wobei das erste und das zweite Ende (11, 12) des Schubbands (10, 10') in den beiden übereinander oder einander gegenüber liegenden Wegen oder Gleitschienen (28, 30) laufen und die Antriebsmittel (15) ein Antriebs- und Rückfuhrungsrad (18) aufweisen, um das sich das Schubband (10, 10') teilweise wickelt, damit ein Teil des Schubbands (10, 10') in der ersten Gleitschiene und ein anderer Teil in der zweiten Gleitschiene ist.

11. Verdunklungsanlage einer Öffnung (B) gemäß Anspruch 9 oder 10, **dadurch gekennzeichnet, daß** die beiden Wege oder Gleitschienen (28, 30) durch eine gleiche Mittelwand (26) abgegrenzt sind.

12. Verdunklungsanlage einer Öffnung (B) gemäß einem der Ansprüche 8 bis 11, **dadurch gekennzeichnet, daß** wenigstens ein Schubband (10, 10') aus Polypropylen hergestellt ist.

13. Verdunklungsanlage einer Öffnung (B) gemäß einem der Ansprüche 8 bis 12, **dadurch gekennzeichnet, daß** wenigstens ein Schubband (10, 10') mittels einer Schwenkverbindung mit zur Ebene des Schubbands (10, 10') senkrechter Achse mit einer Laststange (3, 3') verbunden ist.

14. Verdunklungsanlage einer Öffnung (B) gemäß einem der Ansprüche 8 bis 13, **dadurch gekennzeichnet, daß** ein erstes Ende (2) eines Schubbandes (10, 10') in umkehrbarer Weise mit einer Laststange (3, 3') verbunden ist, um eine Demontage von deren Verbindung zu ermöglichen, um die Laststange (3, 3') von Hand zu betätigen.

15. Kraftfahrzeug mit einer Verdunklungsanlage gemäß einem der Ansprüche 1 bis 14.

## Claims

1. A window blind arrangement (B), comprising:
- a window blinding system (S), that comprises one first end (2) linked to one first load bar (3), and a second end (2') linked to a second load bar (3'), the load bars extending between two guiding rails (40) positioned opposite a window (B); and
- a system of crossed cables for translational guide each load bar (3, 3') to the guiding rails (40), between a retracted position (R) and an extended position (E);
comprising:
- a first cable (5) extends between two points (P1, P1') located on a same side of the window (B), the first cable (5) circulating in the two load bars (3, 3');
- a second cable (5') extends between two points (P2, P2') located at the opposite relative to each other on a diagonal of the window (B), by circulating in the two load bars (3, 3'), **characterized in that** the system of crossed cables comprises:
- a third cable (5") extends between the points (P3, P3') located at the opposite relative to each other on a diagonal of the window (B), by circulating in a single one of the two load bars (3, 3').

2. A window blind arrangement (B) according to claim 1, **characterized in that** each cable (5, 5', 5") passes within one or several load bars (3, 3') which can slide on the cable.

3. A window blind arrangement (B) according to claim 1 or 2, **characterized in that** between their fixed point (P1, P1', P2, P2', P3, P3'), each cable (5, 5', 5") has a length substantially equal to the sum of the length of a load bar (3, 3') and of the distance separating the fixed points (P1, P1', P2, P2 , P3, P3'), measured parallel to the direction of displacement of a load bar (3, 3').

4. A window blind arrangement (B) according to one of claim 1 to 3, **characterized in that** the first cable (5) circulates within two-thirds of the length of each load bar (3, 3').

5. A window blind arrangement (B) according to one of claim 1 to 4, **characterized in that** the second cable (5') circulates within two-thirds of the length of the first load bar (3) and within one-thirds of the length of the second load bar (3').

6. A window blind arrangement (B) according to one of claim 1 to 5, **characterized in that** between the first load bar (3) and the second load bar (3'), the first and second cable (5, 5') are perpendicular to the load bars (3, 3').

7. A window blind arrangement (B) according to one of claim 1 to 6, **characterized in that** the third cable (5") circulates within the second load bar (3').

8. A window blind arrangement (B) according to one of claim 1 to 7, **characterized in that** it comprises a first operating device (D) comprising a push belt (10) connected to the first load bar (3), and/or a second operating device (D') comprising a push belt ( 10') connected to the second load bar (3').

9. A window blind arrangement (B) according to claim 8, **characterized in that** the push belt (10) of the first operating device (D) circulates within two parallel tracks or slides (28, 30), located on one side of the window (B), and/or **in that** the push belt (10') of the second operating device (D') circulates within two parallel tracks or slides (28, 30), located on one opposite side of the window (B)

10. A window blind arrangement (B) according to claim 9, **characterized in that** each operating device (D, D') comprises:
- a flexible push belt (10, 10') that comprises a first end (11) linked to a load bar (3, 3') and a second end (22), the push belt being adapted to transmit a pushing force to the load bar (3, 3');
- motorized means (15) for driving the push belt (10, 10'), adapted to translationally move the push belt (10, 10') between a proximal position (Pp) corresponding to the retracted position (R) of a load bar (3, 3') and a distal position (Pd) corresponding to the extended position (E) of the load bar (3, 3');
- the first and second ends (11, 22) of the load bar (10, 10') circulate within two parallel tracks or slides (28, 30), superimposed to each other or facing each other, and the motorized means (15) comprise a drive and steering wheel (18) around which the push belt (10, 10') is partially wound so that a portion of the push belt (10, 10') is located in the first slide (28) and another portion is located in the second slide (30).

11. A window blind arrangement (B) according to claim 9 or 10, **characterized in that** the two tracks or slides (28, 30) are delimited by a same median wall (26).

12. A window blind arrangement (B) according to one of claims 8 to 11, **characterized in that** at least one push belt (10, 10') is made of polypropylene.

13. A window blind arrangement (B) according to one of claims 8 to 12, **characterized in that** at least one push belt (10, 10') is linked to a load bar (3, 3') by a pivot connection of axis perpendicular to the plane of the push belt (10, 10')

14. A window blind arrangement (B) according to one of claims 8 to 13, **characterized in that** a first end (2) of a push belt (10,10') is reversibly linked to a load bar (3, 3'), to allow a manual operation of the load bar (3, 3').

15. Vehicle comprising a window blind arrangement according to one of claims 1 to 14.
